Europäisches Patentamt

European Patent Office

Office européen des brevets

(19)

(11) EP 0 593 560 B1

(12) EUROPEAN PATENT SPECIFICATION

(45) Date of publication and mention
of the grant of the patent:
**03.09.1997 Bulletin 1997/36**

(21) Application number: **92914091.1**

(22) Date of filing: **09.07.1992**

(51) Int Cl.[6]: **G02F 1/29**, G02B 6/28

(86) International application number:
**PCT/GB92/01246**

(87) International publication number:
**WO 93/01518 (21.01.1993 Gazette 1993/03)**

(54) **AN OPTICAL SWITCH**

OPTISCHER SCHALTER

COMMUTATEUR OPTIQUE

(84) Designated Contracting States:
**DE ES FR GB IT NL SE**

(30) Priority: **09.07.1991 GB 91147314**

(43) Date of publication of application:
**27.04.1994 Bulletin 1994/17**

(73) Proprietor: **BRITISH TELECOMMUNICATIONS
public limited company
London EC1A 7AJ (GB)**

(72) Inventor: **BLOW, Keith James
Woodbridge, Suffolk, IP12 1HA (GB)**

(74) Representative: **Roberts, Simon Christopher et al
BT Group Legal Services,
Intellectual Property Department,
8th Floor, Holborn Centre
120 Holborn
London EC1N 2TE (GB)**

(56) References cited:
**EP-A- 0 442 518**

- **IEEE JOURNAL OF QUANTUM ELECTRONICS.
  vol. 22, no. 5, May 1986, NEW YORK US pages
  595 - 602 SETTERLIND C.J. ET. AL. 'Directional
  coupler switches with optical gain'**
- **SOVIET JOURNAL OF QUANTUM
  ELECTRONICS. vol. 16, no. 12, December 1986,
  NEW YORK US pages 1621 - 1624 GERSHOIG
  A.V. ET AL. 'Optical characteristics of devices
  with coupled waveguides utilizing
  semiconductor heterostructures'**
- **OPTICS LETTERS. vol. 13, no. 10, October 1988,
  NEW YORK US pages 904 - 906 FRIBERG S. R.
  ET AL 'Femtosecond switching in
  dual-core-fiber nonlinear coupler' cited in the
  application**
- **SNYDER A.W. AND LOVE J.D. 'Optical
  waveguide theory' 1983 , CHAPMAN & HALL ,
  LONDON cited in the application**

**Description**

This invention relates to an optical switch and a method of operating such a switch and in particular to a linear coupler optical switch.

When the waveguiding regions of optical waveguides are brought into close proximity, evanescent coupling of the fibre fields of an optical signal can occur leading to optical power transfer between the two waveguides. This is the basis of fused fibre couplers and polished couplers as described in Elect. Lett. 17, 243 (1981) "Fused Single Mode Access Couplers", CA Villarruel and RP Moeller and in Elect. Lett. 18, 929 (1982) "Single-mode Fibre Optic Directional Coupler" R Bergh, G Kotler and HJ Shaw, respectively. These are four-port linear couplers with one input port and one output port being provided by the ends of each waveguide. An optical signal coupled into one port of one waveguide will, if at an appropriate wavelength, initially propagate along that waveguide but will couple across to the other waveguide in a characteristic distance known as the coupling length which is a function of the wavelength of the optical signal.

The coupling length is also referred to as the half-beat length as it is half the length necessary for the optical signal to couple to the other waveguide and then couple back again, ie a single beat. A three half-beat coupler will couple an optical signal coupled to the input port of one optical waveguide to the output port of the other waveguide; a two half-beat coupler will couple an optical signal coupled to the input port of one optical waveguide to the output port of the same waveguide.

It is known that optical switching can occur between two optical waveguides formed from semiconductor materials as described in IEE Journal of Quantum Electronics, QE-22, 5, pp 595-601, "Directional Coupler Switches with Optical Gain" CJ Setterlind and L Thylen. The semiconductor waveguides have a length of 3.6 mm - the device length being chosen to be equal to the coupling length of the structure with $g_A = g_B = ocm^{-1}$. The device switches from a cross to a bar state according to the drive currents applied to each waveguide. The changes in switching behaviour are said to be due to carrier-induced changes in the refractive index of the semiconductor material.

According to a first aspect of the present invention there is provided an optical switch for switching optical signals at an operating wavelength ($\lambda_1$) comprising a pair of optical waveguides (4,6) configured as a four-port linear coupler and the switch being controllable to provide a mean differential gain coefficient between the waveguides which is equal either to a value of zero or to a first non-zero value, at which two values the linear coupler is a cross-coupler or a through-coupler at the operating wavelength ($\lambda_1$), characterised in that at the zero and the first non-zero value of the mean differential gain coefficient the linear coupler is, respectively, a substantially three half-beat coupler and a substantially two half-beat coupler at the operating wavelength ($\lambda_1$), the switch including pumping means (18, 20) to effect changes in the mean differential gain coefficient.

An optical signal at the operating wavelength coupled to an optical waveguide of such a switch will exit via the same or other waveguide according to whether the mean differential gain coefficient is a zero or the first value. As will be explained later, the mean differential gain coefficient can be positive or negative as can the actual gain provided to the optical signal by a given waveguide of the switch.

According to a second aspect of the present invention there is provided a method of switching an optical signal as claimed in claim 7.

The operation of linear couplers can be described in terms of interferometric beating between the global modes of the two constituent waveguides. In general the choice between the global mode picture and the evanescent coupling picture is a matter of taste but in this application the local mode description is more convenient since the absorption is diagonal in this representation. The generalisation of the standard coupled mode equations set out by AW Synder and JD Love in the book "Optical Waveguide Theory" Published by Chapman and Hall, London 1083 can be written

$$i\frac{da}{dz} = \lambda b - i\Gamma_a a \tag{1}$$

$$i\frac{db}{dz} = \lambda a - i\Gamma_b b$$

where a and b are the optical signal strengths in the respective waveguides, $\lambda$ is the coupling coefficient between the waveguides and $\Gamma_a$ and $\Gamma_b$ are the absorption coefficients. Since this is a simple linear equation we insert the trial solution exp(iwz) to obtain the following eigenvalue equation

$$\begin{bmatrix} -i\Gamma_a & \lambda \\ \lambda & -i\Gamma_b \end{bmatrix} = -\omega I \tag{2}$$

which yields the eigenvalues

$$\omega_\pm = i\bar{\Gamma} \pm \sqrt{\lambda^2 - (\overline{\Delta\Gamma})^2} \tag{3}$$

where $\bar{\Gamma} = (\Gamma_a + \Gamma_b)/2$ and $\overline{\Delta\Gamma} = (\Gamma_a - \Gamma_b)/2$ are the mean gain and the mean differential gain coefficients respectively. The solution for the two field components is then given by

$$a = Ae^{i\omega_+ z} + Be^{i\omega_- z}$$

$$\tag{4}$$

$$b = \frac{-\omega_+ + i\Gamma_a}{\lambda} Ae^{i\omega_+ z} + \frac{-\omega_- + i\Gamma_a}{\lambda} Be^{i\omega_- z}$$

with A and B determined by the initial conditions in the normal way. Equation (4) is strictly only valid when $\omega_+ \neq \omega_-$. When the eigenvalues are degenerate an extra solution $ze^{\omega z}$ must be introduced. In the absence of any gain or loss the eigenvalues reduce to $\pm\lambda$ which gives the familiar coupling behaviour with a beat length of $\pi/\lambda$.

If the gain is symmetric, $\Delta\Gamma = 0$, then the eigenvalues both acquire the same imaginary part as we would expect for a uniform gain. However, when the gain is asymmetric the real part of the eigenvalue is reduced corresponding to an increase in the coupling length so a linear coupler which is a three half-beat coupler at a given operating wavelength can become a two half-beat coupler at that wavelength for certain values of mean differential gain. The dependence of the coupling of a signal from one waveguide to the other as a function of the mean differential gain will be discussed in more detail later in this application.

The switch may be configured such that at the zero and the first value of the mean differential gain coefficient the linear coupler is, respectively, a substantially three half-beat coupler and a substantially two half-beat coupler at the operating wavelength as this can provide full switching whilst being the easiest of the multi-half beat length linear couplers to manufacture.

The optical waveguides are conveniently provided by a dual-core optical fibre such as described, for example, in an article titled "Femtosecond Switching in a Dual-Core Fibre Nonlinear Coupler", Optics Lett. 13, 904-6 (1988) by SR Friberg, AM Weiner Y Silberberg, BG Sfez and PW Smith as this provides a uniform interaction region which is readily manufactured to the required dimensions but other forms of linear coupler may be usefully employed such as doped planar waveguides, for example planar silica and lithium niobate waveguides.

The optical waveguides preferably comprise optical fibre amplifiers as the mean differential gain can be readily controlled by controlling the amount of optical pumping of the waveguides. It may be sufficient to provide only one of the waveguides as an amplifier if it can provide sufficient gain to obtain the first value of the mean differential gain coefficient.

A convenient optical fibre amplifier suitable for use in switching optical signals within the standard telecommunications windows is the Erbium doped, silica optical fibre amplifier. An advantage of this amplifier is that it is a three level system which means the loss introduced by an unpumped waveguide is approximately equal to the maximum available gain when the population is fully inverted so providing a greater available mean differential gain coefficient for a given gain availability. Such a switch may be operated by pumping one of the waveguides, only, so as to provide the first value of mean differential gain coefficient.

An optical switch according to the present invention and having optical amplifier waveguides may be operated by pumping both waveguides to so as provide zero net gain to a signal at the operating wavelength when providing a zero mean differential gain coefficient thereby providing a zero insertion loss switch.

The present invention will now be described, by way of example only, with reference to the accompanying drawings of which:

Figure 1 is a schematic diagram of an optical switch according to the present invention;

Figure 2 is a graph of an optical signal coupled across the waveguides of an optical switch according to the present invention as a function of distance of propagation along the coupler for various values of mean differential gain coefficient; and

Figure 3 is a graph of the optical signal coupled across an optical switch according to the present invention as a function of mean differential gain coefficient for a coupler according to the present invention.

It was stated above with reference to equations 4 that when the gain is asymmetric the real part of the eigenvalue is reduced corresponding to an increase in the coupling length so a linear coupler which is a three half-beat coupler at a given operating wavelength can become a two half-beat coupler at that wavelength for certain values of mean differential gain.

As a specific example consider the case where b = 0 at the input and we take A=1 (without loss of generality). The solution is easily shown to be

$$a = e^{i\omega_+ z} - \frac{(-\omega_+ + i\Gamma_a)}{(-\omega_- + i\Gamma_a)} e^{i\omega_- z}$$

$$b = \frac{(-\omega_+ + i\Gamma_a)}{\lambda} (e^{i\omega_+ z} - e^{i\omega_- z})$$

(5)

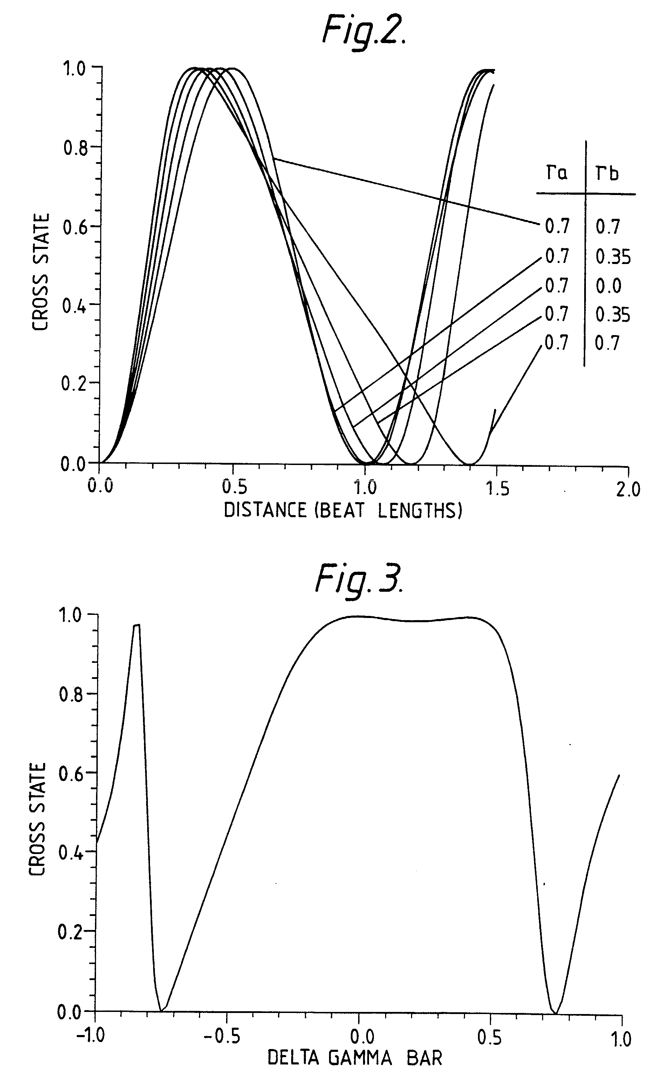

The behaviour of such a coupler as a function of the gain asymmetry is shown in Figure 2. The fraction of the 2total energy in the cross state, ie coupled from one waveguide into the other, is plotted as a function of distance along the coupler for various values of the gain asymmetry. At a single half-beat length, at the operating wavelength for zero mean differential gain coefficient, there is strong modulation of the cross state transmission fraction provided by a non-zero mean differential gain coefficient, but insufficient to be of use. However, a three half-beat length device (again at the operating wavelength for zero mean differential gain coefficient) shows total modulation. As the gain is increased in one arm, which changes the mean differential gain coefficient, the fraction of energy in the cross state reduces and indeed can go to zero.

In Figure 3 there is shown the cross state switching fraction as a function of the differential mean gain coefficient $\overline{\Delta\Gamma}$ for a three half-beat length device.

The curve does not depend on the mean gain but does depend on the device length. The asymmetry in Figure 3 is not particularly surprising given the asymmetric gain provided by the waveguides of the device. One can obtain a simple expression for the switching point by comparing the phase shift in the b field for the symmetric and asymmetric cases. Full switching occurs in a (2n+1) beat length coupler when

$$\frac{\overline{\Delta\Gamma}}{\lambda} = \sqrt{4n+1} \, / (2n+1)$$

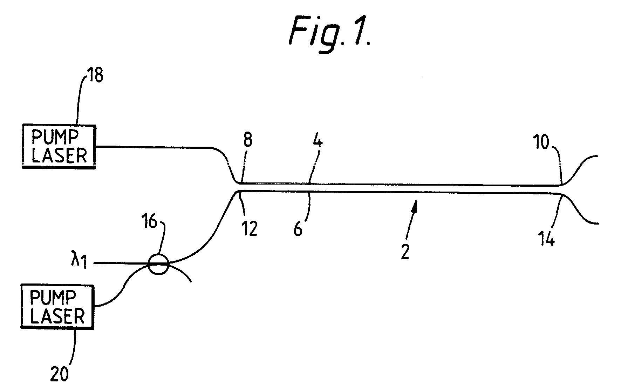

Referring now to Figure 1 an optical switch comprises a four-port linear coupler configured as dual-core silica optical fibre, with waveguiding cores 4 and 6, each core being doped with Erbium ions to form fibre amplifiers. The waveguide defined by core 4 has optical ports 8 and 10, one at each end. Similarly, the waveguide defined by core 6 has optical ports 12 and 14, one at each end. In this device, port 12 is used, arbitrarily, as an input port to the switch 2 and ports 10 and 14 are the output ports.

An input signal at an operating wavelength, $\lambda_1$ is coupled to port 12 via a dichroic coupler 16.

Pump lasers 18 and 20, both operating at approximately 980nm, are coupled directly to the port 8 and indirectly via the coupler 16, respectively. The gain available to the optical signal from each Erbium doped waveguides is controlled by controlling the amount of optical pump power coupled to each core.

The length of the coupler is such that for zero mean differential gain coefficient the coupler is a substantially three half-beat coupler at the operating wavelength $\lambda_1$ and the fibre doped sufficiently to allow optical pumping of one waveguide to provide a sufficiently large mean differential gain coefficient to make the coupler a two half-beat coupler at the operating wavelength.

If we treat the Er amplifier waveguides 4 and 6 as perfect three level systems then the unpumped loss is equal in size to the maximum available gain when the population is fully inverted. For the parameters used in Figure 2, a half-

## EP 0 593 560 B1

beat length of 1m would correspond to an unpumped loss ($\Gamma$=0.7) of 6.1dB/m. In a three half-beat length coupler we require a waveguides to have equal and opposite values of $\Gamma$. This has the advantage of ensuring the overall device gain to be unity and would only require a single arm gain of 19.4dB.

### Claims

1. An optical switch for switching optical signals at an operating wavelength ($\lambda_1$) comprising a pair of optical waveguides (4,6) configured as a four-port linear coupler and the switch being controllable to provide a mean differential gain coefficient between the waveguides which is equal either to a value of zero or to a first non-zero value, at which two values the linear coupler is a cross-coupler or a through-coupler at the operating wavelength ($\lambda_1$), characterised in that at the zero and the first non-zero value of the mean differential gain coefficient the linear coupler is, respectively, a substantially three half-beat coupler and a substantially two half-beat coupler at the operating wavelength ($\lambda_1$), the switch including pumping means (18, 20) to effect changes in the mean differential gain coefficient.

2. A switch as claimed in claim 1, in which the optical waveguides (4,6) are configured as a dual-core optical fibre.

3. A switch as claimed in claim 1 or claim 2, in which at least one of the optical waveguides (4,6) comprises an optical fibre amplifier.

4. A switch as claimed in claim 3, wherein the or each optical fibre amplifier has an associated laser as pump means (18, 20).

5. A switch as claimed in claim 3 or claim 4, wherein the optical fibre amplifier is operable as a three-level system.

6. A switch as claimed in any one of claims 3 to 5, in which the optical fibre amplifiers (4,6) are erbium doped, silica optial fibres.

7. A method of switching an optical signal applied to an input port of a switch as claimed in any one of claims 1 to 6 by controlling the optical pumping means to effect a change in mean differential gain coefficient between zero and the first non-zero value, or vice versa, so that the switch changes from a cross to a bar state, or vice versa.

8. A method as claimed in claim 7, wherein in the bar state both waveguides are pumped.

9. A method as claimed in claim 8, wherein in the bar state the signal sees zero net gain across the switch.

10. A method as claimed in any of claims 7 to 9, wherein in the cross state only one of the waveguides is pumped.

### Patentansprüche

1. Optischer Schalter zum Schalten von optischen Signalen mit einer Betriebswellenlänge ($\lambda_1$), der ein Paar von Lichtwellenleitern (4, 6) enthält, die als ein linearer Vierwegekoppler konfiguriert sind, wobei der Schalter in der Weise gesteuert werden kann, daß er einen mittleren differentiellen Verstärkungskoeffizienten zwischen die Wellenleitern erzeugt, der entweder gleich einem Wert Null oder einem ersten von Null verschiedenen Wert ist, wobei der lineare Koppler bei den beiden Werten ein Kreuzkoppler oder ein Durchgangskoppler bei der Betriebswellenlänge ($\lambda_1$) ist, dadurch gekennzeichnet, daß der lineare Koppler bei dem Null-Wert bzw. bei dem ersten von Null verschiedenen Wert des mittleren differentiellen Verstärkungskoeffizienten im wesentlichen ein Dreihalbe-Schwebungskoppler bzw. im wesentlichen ein Zweihalbe-Schwebungskoppler bei der Betriebswellenlänge ($\lambda_1$) ist, wobei der Schalter eine Pumpeinrichtung (18, 20) enthält, um Änderungen des mittleren differentiellen Verstärkungskoeffizienten auszuführen.

2. Schalter nach Anspruch 1, in dem die Lichtwellenleiter (4, 6) als eine Doppelkern-Lichtleitfaser konfiguriert sind.

3. Schalter nach Anspruch 1 oder Anspruch 2, in dem wenigstens einer der Lichtwellenleiter (4, 6) einen Lichtleitfaser-Verstärker enthält.

**4.** Schalter nach Anspruch 3, wobei der oder jeder Lichtleitfaser-Verstärker als Pumpeinrichtung (18, 20) einen zugeordneten Laser besitzt.

**5.** Schalter nach Anspruch 3 oder Anspruch 4, wobei der Lichtleitfaser-Verstärker als ein Dreiniveau-System betrieben werden kann.

**6.** Schalter nach irgendeinem der Ansprüche 3 bis 5, wobei die Lichtleitfaser-Verstärker (4, 6) mit Erbium dotierte Siliciumdioxid-Lichtleitfasern sind.

**7.** Verfahren zum Schalten eines optischen Signals, das an einen Eingangsanschluß eines Schalters nach irgendeinem der Ansprüche 1 bis 6 angelegt wird, indem die optischen Pumpeinrichtungen so gesteuert werden, daß sie eine Änderung des mittleren differentiellen Verstärkungskoeffizienten zwischen Null und dem ersten von Null verschiedenen Wert oder umgekehrt ausführen, so daß der Schalter von einem Kreuz-Zustand zu einem Balken-Zustand oder umgekehrt wechselt.

**8.** Verfahren nach Anspruch 7, wobei im Balken-Zustand beide Wellenleiter gepumpt werden.

**9.** Verfahren nach Anspruch 8, wobei im Balken-Zustand das Signal über dem Schalter eine Null-Nettoverstärkung sieht.

**10.** Verfahren nach irgendeinem der Ansprüche 7 bis 9, wobei im Kreuz-Zustand nur einer der Wellenleiter gepumpt wird.

## Revendications

**1.** Commutateur optique servant à commuter des signaux optiques fonctionnant à une longueur d'onde ($\lambda_1$), comportant une paire de guides d'ondes optiques (4, 6) agencés en coupleur linéaire à quatre ports, ce commutateur pouvant être commandé de façon que le coefficient de gain différentiel moyen obtenu entre les guides d'ondes prenne soit une valeur nulle, soit une première valeur non-nulle, valeurs pour lesquelles le coupleur linéaire se comporte en coupleur transversal ou en coupleur direct fonctionnant à la longueur d'onde ($\lambda_1$), caractérisé en ce que, quand le coefficient de gain différentiel moyen prend une valeur nulle ou la première valeur non-nulle, le coupleur linéaire se comporte, respectivement, pratiquement comme un coupleur à trois demi-battements ou pratiquement comme un coupleur à deux demi-battements fonctionnant à la longueur d'onde ($\lambda_1$), le commutateur incluant des moyens de pompage (18, 20) pouvant faire varier le coefficient de gain différentiel moyen.

**2.** Commutateur selon la revendication 1, où les guides d'ondes optiques (4, 6) sont agencés sous la forme d'une fibre optique à noyau double.

**3.** Commutateur -selon la revendication 1 ou la revendication 2, où l'un au moins des guides d'ondes optiques (4, 6) comprend un amplificateur de fibre optique.

**4.** Commutateur selon la revendication 3, où le, ou chaque, amplificateur de fibre optique est muni d'un laser associé servant de moyens de pompage (18, 20).

**5.** Commutateur selon la revendication 3 ou la revendication 4, où l'on peut faire fonctionner l'amplificateur de fibre optique comme un système à trois niveaux.

**6.** Commutateur selon l'une quelconque des revendications 3 à 5, où les amplificateurs de fibres optiques (4, 6) sont des fibres optiques en silice dopées à l'erbium.

**7.** Procédé de commutation d'un signal optique appliqué au port d'entrée d'un commutateur selon l'une quelconque des revendications 1 à 6, consistant à commander les moyens de pompage optique pour obtenir une variation du coefficient de gain différentiel moyen entre zéro et la première valeur non-nulle, ou vice-versa, de sorte que le commutateur passe d'un état transversal à un état bloqué, ou vice-versa.

**8.** Procédé selon la revendication 7, où, dans l'état bloqué, les deux guides d'ondes sont pompés.

9. Procédé selon la revendication 8, où, dans l'état bloqué, le signal voit un gain nul à travers le commutateur.

10. Procédé selon l'une quelconque des revendications 7 à 9, où, dans l'état transversal, un seul des guides d'ondes est pompé.

# Fig.1.

## Fig.2.

| Γa | Γb |
|-----|------|
| 0.7 | 0.7 |
| 0.7 | 0.35 |
| 0.7 | 0.0 |
| 0.7 | 0.35 |
| 0.7 | 0.7 |

## Fig.3.